# EUROPÄISCHE PATENTSCHRIFT

(11) **EP 1 778 535 B1**
(45) Veröffentlichungstag und Bekanntmachung des Hinweises auf die Patenterteilung: **04.05.2011**
(21) Anmeldenummer: 05771430.5
(22) Anmeldetag: 29.07.2005
(51) Int. Cl.: B62D 25/06, B60J 10/00

(54) **LICHTDURCHLÄSSIGES DACHELEMENT FÜR KRAFTFAHRZEUGE**
LIGHT-PERMEABLE ROOF ELEMENT FOR MOTOR VEHICLES
ELEMENT DE TOIT TRANSPARENT DESTINE A DES VEHICULES

(30) Priorität: 30.07.2004 FR 0408428
(43) Veröffentlichungstag der Anmeldung: 02.05.2007
(73) Patentinhaber: Webasto AG, 82131 Stockdorf (DE)
(72) Erfinder: GUICHETEAU, Jean-Luc, Omnipat, F-13100 Aix en Provence (FR)
(74) Vertreter: Grünberg, Thomas
(86) Internationale Anmeldenummer: PCT/DE2005/001347
(87) Internationale Veröffentlichungsnummer: WO 2006/012873

(56) Entgegenhaltungen:
- EP-A- 1 440 869
- DE-A1- 10 237 322
- US-A1- 2002 021 029
- US-A1- 2003 122 405
- US-A1- 2004 075 304
- US-A1- 2004 104 603

## Beschreibung

Die vorliegende Erfindung betrifft ein lichtdurchlässiges Dachelement, das dazu bestimmt ist, eine im Dach eines Kraftfahrzeuges angebrachte Öffnung zu verschlißen.
Ein Dachelement ist den Merkmalen des Oberbegriffs des Patentanspruchs 1 ist aus der US 2004/0104603 A1 bekannt. Es Ist an sich bekannt, dass das Dach eines Kraftfahrzeuges zumindest teilweise durch eine transparente oder durchscheinende Scheibe insbesondere aus Glas oder aus Plastikmaterial gebildet werden kann. In an sich bekannter Weise wird die im Dach angebrachte Öffnung durch einen eine Auflagefiäche bilden-den Anschlag abgegrenzt, der eine Abschlussfläche bildet, die dazu bestimmt ist, die periphere Kante der Glasscheibe aufzunehmen.

Im Allgemeinen erstreckt sich die Öffnung in Querrichtung zwischen den seitlichen Begrenzungslinien der Karosserie und in Längsrichtung zwischen einem vorderen Dachelement, das den Dachhimmel und die Windschutzscheibe trennt, und einem hinteren Dachelement, das den Dachhimmel und die Heckscheibe bzw. die Heckklappe trennt. Die seitlichen Dachelemente, das vordere Dachelement und das hintere Dachelement weisen jeweils an ihrem gegenüber der Öffnung liegenden Rand einen getrennten peripheren Anschlag auf. Die Kombination dieser vier einzelnen peripheren Anschläge bildet die Auflagefläche, welche es ermöglicht, die periphere Kante der Glasscheibe aufzunehmen, deren feste Verbindung in an sich bekannter Weise durch Verkleben erfolgt.

In der Praxis ist ein Kraftfahrzeug mit Glasdach lediglich eine Ableitung eines traditionellen Modelis mit Blechdach. Dies bedeutet, dass die Glasscheibe auf eine Standardkarosserie aufgeklebt werden muss, d.h. also auf eine Auflagefläche, die nicht spezifisch dafür vorgesehen ist. Da nun diese Auflagefläche in Form eines Anschlags grundsätzlich für das Aufschweißen eines Blechdaches vorgesehen ist, hat sie keinen besonderen Anforderungen im Hinblick auf Ebenheit und/oder stetigen Verlauf zu erfüllen. Dies stellt im Falle des Aufklebens einer Glasscheibe einen wesentlichen Nachteil dar.

Die Technik der festen Verbindung durch Verkleben erfordert eine regelmäßige, stetige und im wesentlichen zu dem fest zu verbindenden Element parallel verlaufende Auflagefläche. Wenn es nämlich Mängel des ebenen Verlaufs gibt und/oder wenn Unterbrechungen vorhanden sind, ist es so, dass Regelmäßigkeit und stetiger Verlauf des Aufbringen von Klebstoff nicht mehr gesichert sind. Daraus ergibt sich ein wesentliches Risiko von Undichtigkeiten, nachdem die Scheibe einmal angebracht wurde. Wenn diesem Nachteil abgeholfen werden soll und/oder wenn der Abstand zwischen der Auflagefläche und der Fläche des zu verbindenden Elementes wesentliche Abweichungen aufweist, kann die Versuchung bestehen, zusätzlichen Klebstoff einzubringeh. Leider ist es auf dem technischen Gebiet des Verklebens gut bekannt, dass ein Klebstoffüberschuss mit einer guten Befestigung absolut unvereinbar ist.

Demzufolge ist das durch die vorliegende Erfindung zu lösende, technische Problem, ein Dachelement vorzuschtagen, das dazu bestimmt ist, eine im Dach eines Kraftfahrzeuges, das eine lichtdurchlässige Scheibe aufweist, weiche geeignet ist, mit der die Öffnung abgrenzenden Auflagefläche fest verbunden zu werden, angebrachte Öffnung zu verschließen, wobei das genannte Dachetement es erlauben würde, die Probleme nach dem Stand der Technik dadurch zu vermeiden, dass ein effizientes Verkleben unabhängig vom Profil der Auflagefläche ermöglicht und gleichzeitig eine erhöhte Dichtigkeit der so ausgeführ ten Verbindung garantiert wird.

Die Erfindung ist durch die Merkmale des Anspruchs 1 definiert. Jedes Übergangselement ist demzufolge dazu bestimmt, sandwichartig zwischen einem Teil der peripheren Innenfläche und einem entsprechenden Teil der Auflagefläche erfasst zu werden. Der Zweck liegt darin, entsprechend den Gegebenheiten Mängel des ebenen Verlaufe und/oder Unterbrechungen der Auflagefläche und/oder zu große Abweichungen des Abstandes zu kompensieren, der zwischen der inneren peripheren Oberfläche und der genannten Auflagefläche besteht.

Die Dicke jedes Übergangselementes ist also als Funktion des Profils des entsprechenden Teils der Auflagefläche, aber auch als Funktion der gewünschten relativen Positionierung zwischen der Glasscheibe und der genannten Auflagefläche insgesamt betrachtet variabel. Das Ziel ist es, die innere periphere Fläche auf der Auflagefläche fest zu verbinden, indem eine konstante Klebstoffstärke verwendet wird, welche eine Garantie für perfekte Fixierung und Dichtigkeit ist.

Die wie oben definierte Erfindung weist den Vorteil auf, dass sie sich an ein übliches kraftfahrzeug anpassen kann, d.h. also ein Fahrzeug, das vor allem dazu bestimmt ist, ein Blechdach zu erhalten. Es ist in der Tat wirtschaftlicher, die Glasdächer anzupassen, anstatt die Auflagefläche jedes Standardfahrzeuges zu modifizieren.

Die vorliegende Erfindung betrifft auch Merkmale, die sich im Laufe der vorliegenden Beschreibung ergeben und die einzeln bzw. nach ihren sämtlichen technisch möglichen Kombinationen zu betrachten sind.

Weitere Merkmale und Vorteile der Erfindung gehen aus der nachstehenden Beschreibung hervor, in der unter Bezugnahme auf die Zeichnungen Ausführungsbeispiele erläutert werden. In den Zeichnungen zeigen:
- Fig. 1: eine Ansicht von unten mit der teilweisen Darstellung eines erfin- dungsgemäßen lichtdurchlässigen Dachelements;
- Fig. 2: das Dachelement nach Fig. 1 im Querschnitt nach der Ebene AA',
- Fig. 3: das Dachelement nach Fig. 1 im Querschnitt nach der Ebene BB', und
- Fig. 4: eine Ausführungsvariante der Erfindung.

Aus Gründen der Übersichtlichkeit wurden gleiche Elemente mit gleichen Bezugszeichen bezeichnet. Desgleichen wurden lediglich die für das Verständnis der Erfindung wesentlichen Elemente dargestellt, und zwar unabhängig vom Maßstab und jeweils in schematischer Form.

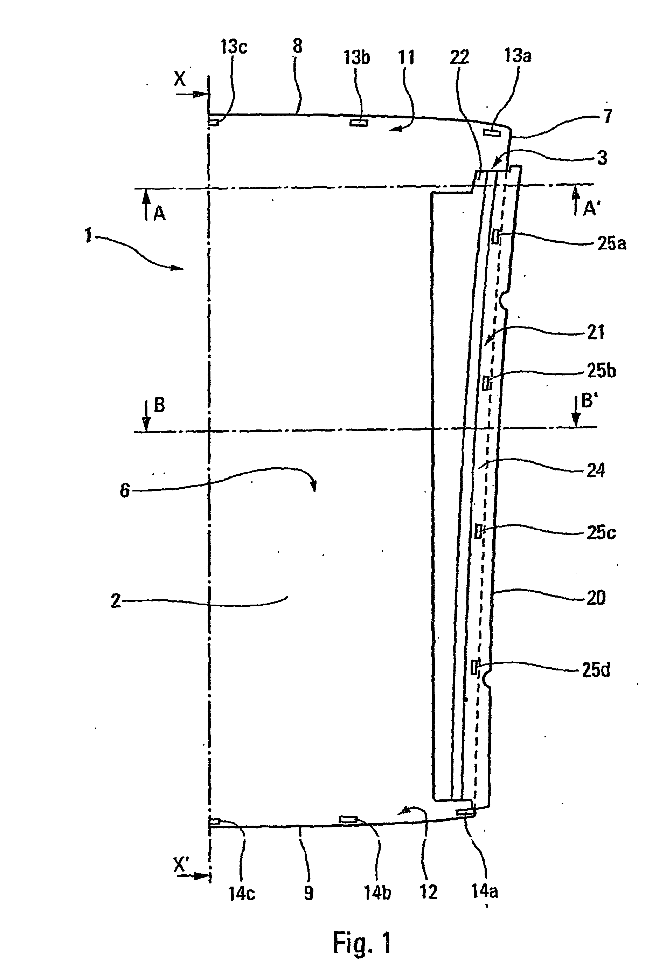

Fig. 1 zeigt ein lichtdurchlässiges Dachelement 1, das dazu bestimmt ist, eine im Dach 101 eines Fahrzeuges 100 angebrachte Öffnung 102 zu verschließen. Lediglich eine Längshälfte ist hier sichtbar, es ist jedoch klar, dass das Dachelement 1 tatsächlich in bezug auf die Ebene XX' vollständig symmetrisch ist.

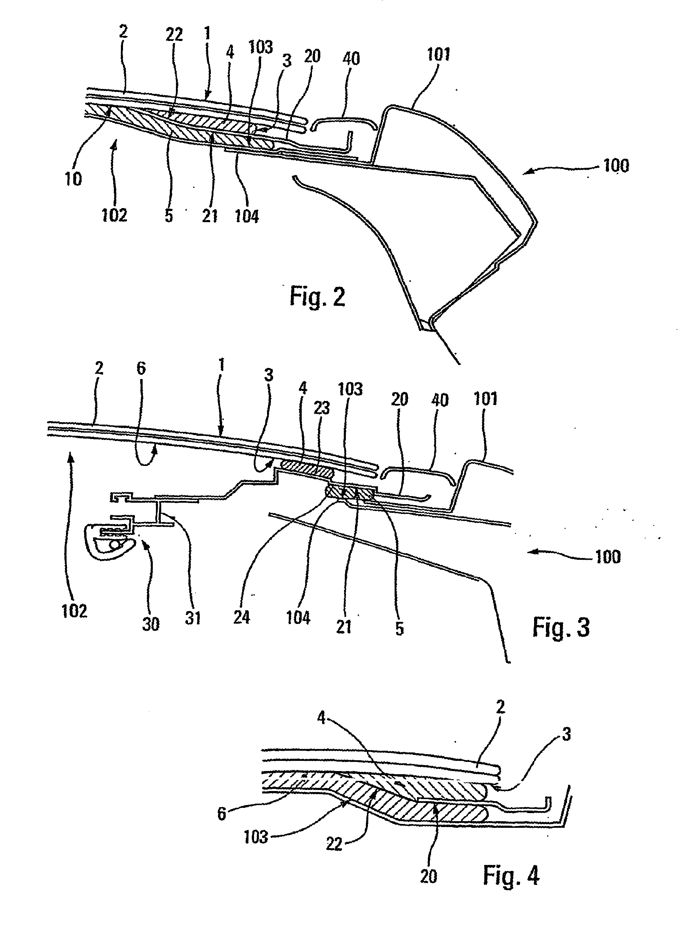

Wie aus den Figuren 2 und 3 ersichtlich ist, wird die Öffnung 102 durch einen Anschlag 104, der eine Auflagefläche 103 bildet, begrenzt, die ein integraler Bestandteil der das Dach 101 bildenden Karosseriestruktur ist. Das Dachelement 1 weist einerseits eine lichtdurchlässige Scheibe 2 auf, die mit der genannten Auflagefläche 103 fest verbunden (bzw. fest zu verbinden) ist.

Bei dieser besonderen Ausführungsform, die lediglich als Beispiel angegeben wird, wird die lichtdurchlässige Scheibe 2 aus Glas hergestellt. Es ist jedoch offensichtlich, dass jedes andere transparente oder durchscheinende Material in äquivalenter Weise Verwendung finden könnte.

Entsprechend dem Gegenstand der vorliegenden Erfindung weist das Dachelement 1 hier zwei Übergangselemente 20 auf, die an der peripheren inneren Fläche 3 der Scheibe 2 durch eine Klebstoffraupe 4 fest verbunden sind. Jedes Übergangselement 20 weist im übrigen eine Abstützfläche 21 auf, die im wesentlichen parallel zu einem Teil der gegenüberliegenden Auflagefläche 103 verläuft. Die feste Verbindung zwischen der Abstützfläche 21 und dem genannten entsprechenden Teil der Auflagefläche 103 wird wiederum durch Verkleben, diesmal über eine Klebstoffraupe 5 ausgeführt.

Es ist anzumerken, dass unter der peripheren inneren Fläche 3 jedwede Fläche zu verstehen ist, die am Rand bzw. an der Innenseite 6 der Scheibe 2 befindlich ist.

Jedes Übergangselement 20 ist somit in der Lage, jede Unregelmäßigkeit der Parallelität und/oder des Abstandes zwischen der peripheren inneren Fläche 3 und der Auflagefläche 103 zu kompensieren. Die Verklebung kann dann vorteilhafterweise mit einer konstanten Klebstoffstärke für eine optimale Verbindung und Dichtigkeit ausgeführt werden.

Mit anderen Worten hat jedes Übergangselement 20 eine im wesentlichen komplementäre Form zum entsprechenden Teil der Auflagefläche 103. Es bildet also ein ideales Übergangselement für die Verbindung dieser beiden Elemente, die in der Praxis fast niemals komplementär sind, wobei festzuhalten ist, dass die Regelmäl3igkeit und der stetige verlauf der Klebstoffaufbringung für eine gute Verklebung unerlässliche Kriterien darstellen.

Bei diesem zur Erläuterung der Erfindung gewählten Ausführungsbeispiel weisen lediglich die beiden Längskanten 7 der Glasscheibe 2 Übergangselemente 20 auf, die im übrigen vollständig symmetrisch sind. Die beiden Querkanten vorne 8 und hinten 9 der Glasscheibe 2 weisen ihrerseits keinerlei Übergangselement 20 auf.

Wie in Fig. 2 zu sehen ist, sind die Enden jedes Übergangselements 20 vorteilhafterweise in der Weise ausgestaltet, dass sie in bezug auf die unmittelbar danebenliegenden Teile 10 der peripheren inneren Fläche 3 keine Unterbrechungen aufweisen. Bei diesem Beispiel weist jedes der betreffenden Enden einen abgeschrägten Teil 22 auf, welcher in der Lage ist, die Stärke der Klebstoffraupe 5, welche das Übergangselement 20 und die Auflagefläche 103 verbindet, im wesentlichen konstant zu halten.

Nach einem besonderen Erfindungsmerkmal weist jedes Übergangselement 20 eine Form auf, die im wesentlichen dem Raum entspricht, der einerseits die periphere innere Fläche 3 und andererseits die Auflagefläche 103 trennt, die mit einer konstanten und adäquaten Klebstoffstärke bedeckt ist, wenn die relative Positionierung der genannten peripheren inneren Fläche 3 und der genannten Auflagefläche 103 optimal ist.

In der Praxis hat also jedes Übergangselement 20 eine komplexe Form, die aus dem häufig komplizierten Profil der Auflagefläche 103 resultiert. Jedem konkaven Teil des Übergangselementes 20 entspricht ein konvexer Teil der Auflagefläche 103 und umgekehrt.

Nach einem weiteren Erfindungsmerkmal weist jedes Übergangselement 20 eine Innenfläche 23 mit im wesentlichen zu dem Teil der peripheren inneren Fläche 3, mit dem es durch Verkleben verbunden wird, komplementärer Form sowie eine Außenfläche 24 auf, welche eine Abstützfläche 21 bildet, deren Form im wesentlichen zu dem Teil der Auflagefläche 103 komplementär ist, mit dem sie ebenfalls durch Verkleben verbunden ist.

Nach einer in Fig. 4 dargestellten Ausführungsvariante wird der Übergang zwischen der Abstützfläche 6 des Klebstoffes auf dem Glas und der Abstützfläche des Klebstoffes auf dem Übergangselement 20 durch die Abstützfläche 22 sichergestellt, die durch ein Konfektionieren des Glases/Übergangselementes oder eines ausgeformten Klebstoffes zwischen dem Glas und dem Übergangselement gebildet wird.

Wie in Fig. 1 zu sehen ist, ist jedes Übergangselement 20 mit einer Vielzahl von hervorstehenden Teilen versehen, die Kalibrieranschläge 25a, 25b, 25c, 25d bilden, deren Höhe der gewünschten Stärke des Klebstoffs entspricht. Das distale Ende jedes Kalibrieranschlages 25a, 25b, 25c, 25d ist dazu bestimmt, mit der Auflagefläche 103 in Kontakt zu kommen. Das Vorhandensein dieser hervorstehenden Kalibrieranschläge 25a, 25b, 25c, 25d ermöglicht ein Positionieren der mit den Übergangselementen 20 verbundenen Glasscheibe 2 in bezug auf die Auflagefläche 103 mit einem relativen gegebenen Abstand entsprechend der gewünschten Stärke des Klebstoffes. Vorzugsweise werden die genannten Kalibrieranschläge 25a, 2b, 25c, 25d regelmäßig längs jedes Übergangselementes 20 verteilt.

Fig. 1 zeigt ebenfalls, dass in ähnlich vorteilhafter Weise jeder freie Teil 11, 12 der peripheren inneren Fläche 3 mehrere Kalibrieranschläge 13a, 13b, 13c; 14a, 14b, 14c, 15c aufweist, deren Höhe der gewünschten Klebstoffstärke entspricht. Es ist anzumerken, dass unter dem freien Teil 11, 12 natürlich jeder Teil der peripheren inneren Fläche 3 zu verstehen ist, der nicht mit einem beliebigen Überaanaselement 20 versehen ist. Auch hier sind wieder die Kalibrieranschläge 13a, 13b, 13c; 14a, 14b, 14c, 15c vorteilhafterweise in regelmäßiger Form längs jedes freien Teils 11, 12 verteilt.

Bei diesem Ausführungsbeispiel ist jedes Übergangselement 20 aus Metall ausgeführt. In äquivalenter Weise könnte es jedoch auch aus Plastikmaterial bestehen, das beliebig die Form eines thermoplastischen oder duroplastischen Materials haben kann oder es könnte auch durch eine Klebstoffraupe aus extrudiertem Polyurethan gebildet werden, die direkt auf die Glasscheibe 2 aufgebracht wird.

Nach Fig. 3 kann das Dachelement 1 mit einem an sich bekannten Verdunkelungsmechanismus 30 verbunden sein, der parallel zur Innenfläche 6 der Glasscheibe 2 ausgefahren werden kann, um insbesondere an Tagen mit starker Sonneneinstrahlung den Treibhauseffekt im Inneren des Fahrgastraums des Kraftfahrzeuges 100 zu begrenzen. Bei diesem Beispiel scheint es insbesondere vorteilhaft zu sein, dass eines oder mehrere Übergangselemente 20 in der Lage sind, den Verdunkelungsmechanismus 30 und insbesondere seine Führungsschienen 31 zu tragen. Dieses Merkmal ermöglicht eine direkte feste Ver bindung des Verdunkelungsmechanismus 30 mit dem Dachelement 1 und somit die vorteilhafte Bildung eines regelrechten kompletten und einbaubereiten Moduls.

Selbstverständlich kann jedes Übergangselement 20 genutzt werden, um weitere Teile des Kraftfahrzeuges 100 aufzunehmen, wie z.B. eine äußere Zierleiste 40 oder eine Innenverkleidung.

## Patentansprüche

1. Dachelement (1), das zum Verschließen einer in einem Dach (101) eines Kraftfahrzeuges (100) angebrachten Öffnung (102) bestimmt ist und eine lichtdurchlässige Scheibe (2) aufweist, die mit einer die Öffnung (102) begrenzenden Auflagefläche (103) fest verbunden werden kann, wobei es entlang des beiden Längskanten der Scheiben (20) jeweils ein Übergangselement (20) aufweist, **dadurch gekennzeichnet, dass** die Übergangselemente (20) jeweils uber eine Klebstoffraupe (4) fest an der peripheren inneren Fläche (3) der Scheibe (2) angebracht sind und jeweils eine Abstützfläche (21) aufweisen die im Wesentlichen zu dem Teil der Auflagefläche (103) parallel ist, mit dem die genannte Abstützfläche (21) zur Deckung gebracht wird, und die mittels einer Verklebung, insbesondere Kleberaupe (5), mit der Auflagefläche (103) fest verbunden werden kann.

2. Dachelement (1) nach Anspruch 1, **dadurch gekennzeichnet, dass** jedes Übergangselement (20) eine Form aufweist, die im Wesentlichen dem Raum entspricht, der einerseits die periphere innere Fläche (3) und andererseits die mit einer konstanten und adäquaten Klebstoffstärke abgedeckte Auflagefläche (103) trennt, wenn die relative Positionierung der peripheren inneren Fläche (3) und der Auflageflache (103) optimal ist.

3. Dachelement (1) nach einem der Ansprüche 1 oder 2, **dadurch gekennzeichnet, dass** jedes Übergangselement (20) eine Innenfläche (23) mit einer Form aufweist, die im Wesentlichen zu dem Teil der peripheren inneren Fläche (3) komplementär ist, mit dem sie fest verbunden wird, sowie eine Außenfläche (24), welche eine Abstützfläche (21) bildet, deren Form im Wesentlichen zu dem Teil der Auflagefläche (103) komplementär ist, mit dem sie zur Deckung gebracht werden soll.

4. Dachelement (1) nach einem der Ansprüche 1 bis 3, **dadurch gekennzeichnet, dass** der Übergang zwischen der Abstützfläche (8) des Klebstoffs auf der Scheibe und der Abstützfläche des Klebstoffs auf dem Übergangselement (20) durch die Abstützfläche (22) gesichert wird, welche durch ein Konfektionieren des Glases/Übergangselementes oder eines ausgeformten Klebstoffes zwischen dem Glas und dem Übergangselement gebildet wird.

5. Dachelement (1) nach einem der Ansprüche 1 bis 4, **dadurch gekennzeichnet, dass** jedes Übergangselement (20) mindestens einen hervorstehenden Teil aufweist, der einen Kalibrieranschlag (25a, 25b, 25c, 25d) bildet, dessen Höhe der gewünschten Stärke des Klebstoffe entspricht.

6. Dachelement (1) nach einem der Ansprüche 1 bis 5, **dadurch gekennzeichnet, dass** jeder freie Teil (11,12) der peripheren inneren Fläche (3) mindestens einen Kalibrieranschlag (13a, 13b, 13c; 14a, 14b, 15c) aufweist, dessen Höhe der gewünschten Klebstoff stärke entspricht.

7. Dachelement (1) nach einem der Ansprüche 5 oder 6, **dadurch gekennzeichnet, dass** Kalibrieranschläge (13a, 13b, 13c, 14a, 14b, 14c, 25a, 25b, 25c, 25d) regelmäßig längs der peripheren inneren Fläche (3) der Scheibe (2) verteilt sind.

8. Dachelement (1) nach einem der Ansprüche 1 bis 7, **dadurch gekennzeichnet, dass** mindestens ein Übergangselement (20) geeignet ist, einen Verdunkelungsmechanismus der Scheibe (2) zu tragen.

9. Dachelement (1) nach einem der Ansprüche 1 bis 8, **dadurch gekennzeichnet, dass** mindestens ein Übergangselement (20) aus Metall besteht.

10. Dachelement (1) nach einem der Ansprüche 1 bis 9, **dadurch gekennzeichnet, dass** mindestens ein Übergangselement (20) aus Kunststoff besteht.

11. Dachelement (1) nach einem der Ansprüche 1 bis 10, **dadurch gekennzeichnet, dass** die lichtdurchlässige Scheibe (2) aus Glas besteht.

## Claims

1. Roof element (1) which is intended for closing an opening (102) provided in a roof (101) of a motor vehicle (100) and has a light-permeable panel (2) which can be fixedly connected to a bearing surface (103) delimiting the opening (102), wherein said roof element has a transition element (20) along both longitudinal edges of the panel (2), **characterized in that** the transition elements (20) are each mounted fixedly on the peripheral inner surface (3) of the panel (2) via an adhesive bead (4) and each have a supporting surface (21) which is substantially parallel to that part of the bearing surface (103) which is covered by the abovementioned supporting surface (21), and which can be connected fixedly to the bearing surface (103) by means of an adhesive bond, in particular an adhesive bead (5).

2. Roof element (1) according to Claim 1, **characterized in that** each transition element (20) has a shape which substantially corresponds to the space which separates the peripheral inner surface (3) on the one hand and the bearing surface (103), which is covered with a constant and adequate adhesive thickness, on the other hand when the relative positioning of the peripheral inner surface (3) and of the bearing surface (103) is optimum.

3. Roof element (1) according to either of Claims 1 and 2, **characterized in that** each transition element (20) has an inner surface (23) with a shape which is substantially complimentary to that part of the peripheral inner surface (3) to which said inner surface (23) is fixedly connected, and an outer surface (24) which forms a supporting surface (21), the shape of which is substantially complementary to that part of the bearing surface (103) which is intended to be covered by said supporting surface.

4. Roof element (1) according to one of Claims 1 to 3, **characterized in that** the transition between the supporting surface (8) of the adhesive on the panel and the supporting surface of the adhesive on the transition element (20) is ensured by the supporting surface (22) which is formed by the glass/transition element or a shaped adhesive between the glass and the transition element being cut to size.

5. Roof element (1) according to one of Claims 1 to 4, **characterized in that** each transition element (20) has at least one protruding part which forms a calibrating stop (25a, 25b, 25c, 25d), the height of which corresponds to the desired thickness of the adhesive.

6. Roof element (1) according to one of Claims 1 to 5, **characterized in that** each free part (11, 12) of the peripheral inner surface (3) has at least one calibrating stop (13a, 13b, 13c; 14a, 14b, 15c), the height of which corresponds to the desired adhesive thickness.

7. Roof element (1) according to either of Claims 5 or 6, **characterized in that** calibrating stops (13a, 13b, 13c, 14a, 14b, 14c, 25a, 25b, 25c, 25d) are distributed regularly along the peripheral inner surface (3) of the panel (2).

8. Roof element (1) according to one of Claims 1 to 7, **characterized in that** at least one transition element (20) is suitable for carrying an obscuring mechanism of the panel (2).

9. Roof element (1) according to one of Claims 1 to 8, **characterized in that** at least one transition element (20) is composed of metal.

10. Roof element (1) according to one of Claims 1 to 9, **characterized in that** at least one transition element (20) is composed of plastic.

11. Roof element (1) according to one of Claims 1 to 10, **characterized in that** the light-permeable panel (2) is composed of glass.

## Revendications

1. Élément de toit (1) conçu pour obturer une ouverture (102) réalisée dans un toit (101) d'un véhicule automobile (100) et comportant une vitre (2) transparente pouvant être reliée fixement à une surface portante (103) délimitant l'ouverture (102), ledit élément comportant respectivement le long des deux arêtes longitudinales de la vitre (2) un élément de transition (20), **caractérisé en ce que** les éléments de transition (20) sont respectivement positionnés fixement contre la surface intérieure périphérique (3) de la vitre (2) à l'aide d'un cordon de colle (4) et comportent respectivement une surface d'appui (21) pour l'essentiel parallèle à la partie de la surface portante (103) avec laquelle ladite surface d'appui (21) est amenée en recouvrement et qui peut être reliée fixement à la surface portante (103) par collage, notamment à l'aide d'un cordon de colle (5).

2. Élément de toit (1) selon la revendication 1, **caractérisé en ce que** chaque élément de transition (20) présente une forme qui correspond pour l'essentiel à l'espace qui sépare d'une part la surface intérieure périphérique (3) et d'autre part la surface portante (103) recouverte d'une épaisseur de colle constante et adéquate lorsque le positionnement relatif de la surface intérieure périphérique (3) et de la surface portante (103) est optimal.

3. Élément de toit (1) selon l'une quelconque des revendications 1 ou 2, **caractérisé en ce que** chaque élément de transition (20) comporte une surface intérieure (23) présentant une forme pour l'essentiel complémentaire par rapport à la partie de la surface intérieure périphérique (3) avec laquelle elle est reliée fixement, ainsi qu'une surface extérieure (24) formant une surface d'appui (21) dont la forme est pour l'essentiel complémentaire par rapport à la partie de la surface portante (103) avec laquelle elle doit être amenée en recouvrement.

4. Élément de toit (1) selon l'une quelconque des revendications 1 à 3, **caractérisé en ce que** la transition entre la surface d'appui (8) de la colle sur la vitre et la surface d'appui de la colle sur l'élément de transition (20) est sécurisée par la surface d'appui (22) formée par confection du verre / de l'élément de transition ou d'une colle formée entre le verre et l'élément de transition.

5. Élément de toit (1) selon l'une quelconque des revendications 1 à 4, **caractérisé en ce que** chaque élément de transition (20) comporte au moins une partie saillante qui forme une butée d'étalonnage (25a, 25b, 25c, 25d) dont la hauteur correspond à l'épaisseur souhaitée de colle.

6. Élément de toit (1) selon l'une quelconque des revendications 1 à 5, **caractérisé en ce que** chaque partie (11, 12) libre de la surface intérieure périphérique (3) comporte au moins une butée d'étalonnage (13a, 13b, 13c ; 14a, 14b, 15c) dont la hauteur correspond à l'épaisseur souhaitée de colle.

7. Élément de toit (1) selon l'une quelconque des revendications 5 ou 6, **caractérisé en ce que** des butées d'étalonnage (13a, 13b, 13c, 14a, 14b, 14c, 25a, 25b, 25c, 25d) sont réparties de façon régulière le long de la surface intérieure périphérique (3) de la vitre (2).

8. Élément de toit (1) selon l'une quelconque des revendications 1 à 7, **caractérisé en ce qu'**au moins un élément de transition (20) est adapté pour supporter un mécanisme d'assombrissement de la vitre (2).

9. Élément de toit (1) selon l'une quelconque des revendications 1 à 8, **caractérisé en ce qu'**au moins un élément de transition (20) est en métal.

10. Élément de toit (1) selon l'une quelconque des revendications 1 à 9, **caractérisé en ce qu'**au moins un élément de transition (20) est en plastique.

11. Élément de toit (1) selon l'une quelconque des revendications 1 à 10, **caractérisé en ce que** la vitre (2) transparente est en verre.
